# EUROPEAN PATENT SPECIFICATION

(11) **EP 1 775 206 B1**
(45) Date of publication and mention of the grant of the patent: **31.08.2016**
(21) Application number: 06021778.3
(22) Date of filing: 17.10.2006
(51) Int. Cl.: F02M 35/16

(54) **Straddle-type vehicle**
Zweiradfahrzeug
Véhicule à deux roues

(30) Priority: 17.10.2005 JP 2005302290; 14.09.2006 JP 2006249869
(43) Date of publication of application: 18.04.2007
(73) Proprietor: Yamaha Hatsudoki Kabushiki Kaisha, Shizuoka-ken Shizuoka 438-8501 (JP)
(72) Inventor: Kawase, Masao, Iwata-shi, Shizuoka-ken 438-8501 (JP)
(74) Representative: Grünecker Patent- und Rechtsanwälte PartG mbB

(56) References cited:
- JP-A- 1 178 093
- JP-A- H0 450 089
- JP-A- 55 127 269
- JP-A- H03 143 790
- JP-A- 2003 160 079
- US-A- 4 438 828
- US-A- 6 073 719
- US-A1- 2003 213 627
- US-A1- 2006 066 092
- "Werkstatthandbuch NINJA ZX-12R (ZX 1200-A)", 29 March 2000 (2000-03-29), Kawasaki Motoren GmbH, Friedrichsdorf

## Description

The present invention relates to a straddle-type vehicle such as, for example, a motorcycle.

Generally, in motorcycles, an engine is suspended from a frame which forms a framework of a vehicle body to be attached thereto. Also, a fuel tank is attached to the frame to be positioned above the engine. As a motorcycle according to the conventional art of this kind, there is one whose battery is placed between the engine and a fuel tank positioned above the engine (for example, see JP-A-Sho 56-82677).

However, because the battery is placed below the fuel tank and adjacent to the fuel tank in the motorcycle described in JP-A-Sho 56-82677, there is a problem such that the battery hinders a tank capacity of the fuel tank from being ensured. Also, if the fuel tank is upsized to ensure the tank capacity, there arises another problem such that a height of the vehicle inevitably becomes higher in accordance with the upsizing of the fuel tank and the layout of various components of the motorcycle need ideas to keep the height of the vehicle lower. In addition, because the battery is positioned in such a narrow space between the fuel tank and the engine, there is a further problem such that a layout design of the battery is difficult.

### Further prior art is known from document JP 2003-160079 A.

US 6 073 719 A describes a low frame motorcycle with the air cleaner being above the engine and the battery and the fuel tank being in the rear of the vehicle. This document is the closest prior art

The present invention is made in view of the problems, and has the objective to provide a straddle-type vehicle that can make a layout design of a battery easier.

This objective is solved in an inventive manner by a straddle-type vehicle according to claim 1.

In particular, with such an embodiment, there is provided a straddle-type vehicle that can ensure a sufficient tank capacity of the fuel tank.

According to a further preferred embodiment, the straddle-type vehicle further comprises a cover covering the air cleaner and the battery, and a seat covering a top of the fuel tank.

Preferably, the battery is placed at a joining portion of the cover and the seat.

Furthermore, the battery may be laid along a bending surface of a frame extending in a longitudinal direction of the vehicle.

The engine is a V-type engine having a front side cylinder and a rear side cylinder, and the battery is positioned above the rear side cylinder and on an axis of the rear side cylinder.

Still further, preferably the battery is attached to a frame under a condition that a length thereof in a width direction of the vehicle is larger than a length thereof in a fore to aft direction of the vehicle.

Preferably, the fuel tank, at least in part, protrudes forward more than a rear end of the battery.

Further, preferably a fuel pump disposed in the fuel tank is positioned rearward more than a rear end of the battery.

According to another preferred embodiment, a frame extending in a longitudinal direction of the vehicle has, at a rear portion thereof, a rear side frame extending downward toward a rear portion of the engine, a swing arm is coupled with the rear side frame for swing movement, a rear wheel is coupled with the swing arm, and wherein the fuel tank, at least in part, is placed in a space surrounded by the rear side frame, the swing arm and the rear wheel in a side elevational view.

Preferably, a pair of rear side frames extends in a vertical direction behind the engine, and the rear side frames and the fuel tank partially overlap with each other in a side elevational view.

Further, preferably the respective centers of the battery, the fuel tank, and the rear wheel extend along a center line of the vehicle in the width direction.

In the following, the present invention is explained in greater detail with respect to several embodiments thereof in conjunction with the accompanying drawings, wherein:
- FIG. 1: is a side elevational view of a motorcycle according to a first embodiment,
- FIG. 2: is a partial and enlarged view showing a main frame, an engine, a fuel tank, an air cleaner and a battery of FIG. 1,
- FIG. 3: is a perspective view showing the main pipe, the air cleaner, the battery and so forth of FIG. 1,
- FIG. 4: is a cross sectional view taken along the line IV-IV of FIG. 1,
- FIG. 5: is a cross sectional view taken along the line V-V of FIG. 1, and
- FIG. 6: is a partial and enlarged view of a main frame, an engine, a fuel tank, an air cleaner and a battery according to a second embodiment of the present invention, viewed from the same location as that of FIG. 2.

### Description of Reference Numerals:

1: motorcycle (straddle-type vehicle)
10: main pipe (frame)
13: rear side pipe (rear side frame)
20: engine
23: rear side cylinder
30, 100: fuel tank
33: exterior cover (cover)
70: air cleaner
80: battery
100E: protruding portion

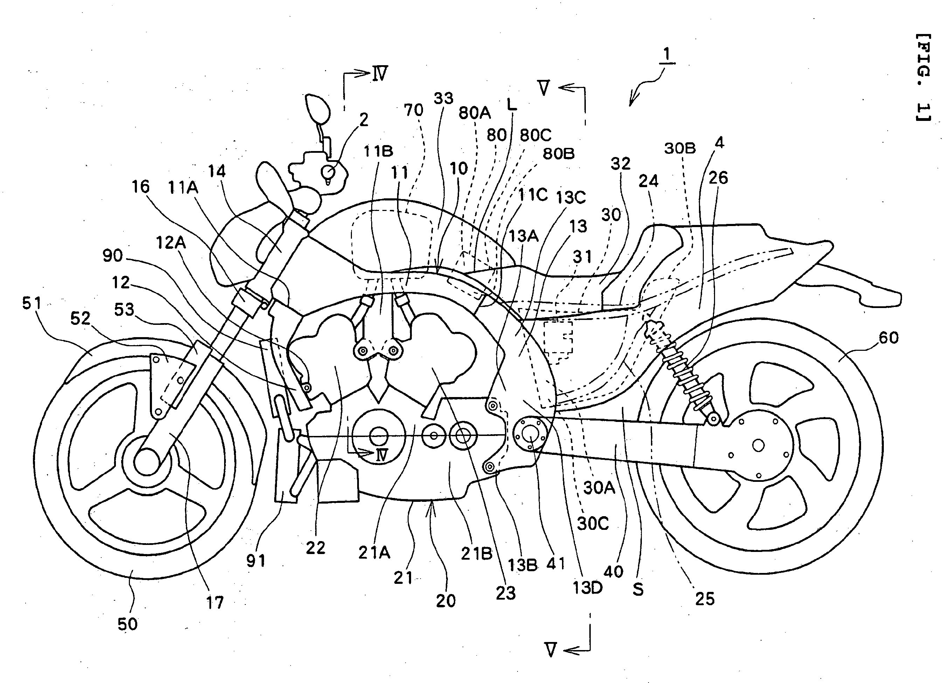

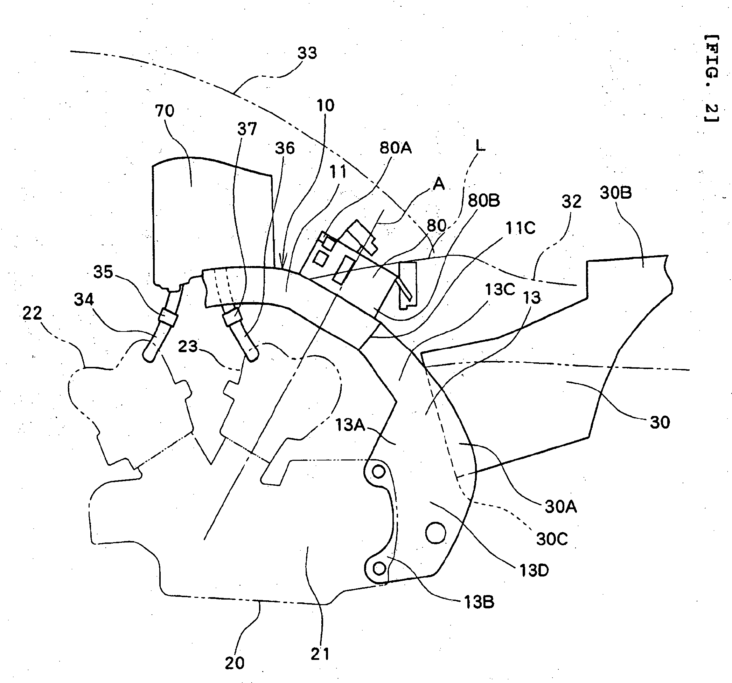

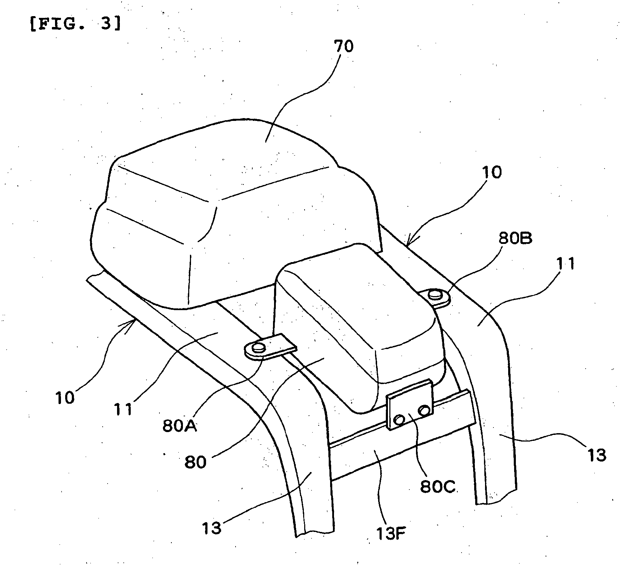

A case in which a straddle-type vehicle according to an embodiment is applied to a motorcycle is raised as an example, and the example will be described with reference to FIGs. 1 and 2. A motorcycle 1 according to the embodiment is, as shown in FIGs. 1 and 2, formed to include a right and a left main pipe 10, 10 (see FIG. 3), an engine 20, a fuel tank 30, an air cleaner 70 and a battery 80.

The main pipes 10 are formed as frames that form a framework of the vehicle body. Each main pipe 10 includes a middle pipe 11 extending generally horizontally above the engine 20 in a fore to aft direction of the vehicle body, a front side pipe 12 having a top end side welded to a front end 11 A side of the middle pipe 11 and extending downward from the front end 11A side in front of the engine 20, and a rear side pipe 13, which is a rear side frame, having a top end side welded to a rear end side of the middle pipe 11 and extending downward from the rear end side in the rear of the engine 20. Additionally, the front end 11 A of each middle pipe 11 is positioned in front of engine brackets 13A, 13B of the rear side pipe 13 which will be described later. And, the rear side pipe 13 can be unitarily formed with each middle pipe 11.

Also, an engine bracket 12A projects at a bottom end side of each front side pipe 12. A front side cylinder 22 of the engine 20 to be described later is fixed to the engine brackets 12A. Engine brackets 11B are disposed at a mid portion of each middle pipe 11 in the longitudinal direction thereof. This engine bracket 11 B extends downward from each middle pipe 11 toward a location between the front side cylinder 22 and a rear side cylinder 23 of the engine 20, both of which will be described later, and a bottom end side thereof is separated like a fork configuration. The respective front side cylinders 22 and rear side cylinders 23 of the engine 20 are fixed to the bottom end sides of the engine brackets 11B.

As shown in FIGs. 1 and 2, the rear side pipe 13 positioned on the rear portion side of each main pipe 10 extends downward, while arcuately curving to turn toward a rear side of a pivot shaft 41 to be described later from a rear end 11C of the middle pipe 11. Each rear side pipe 13 has an upper side engine bracket 13A and a lower side engine bracket 13B on its lower end side, which are both spaced apart vertically to project. An upper side case 21 A and a lower side case 21 B of the engine 20 which will be described later are fixed to the upper side engine bracket 13A and a lower side engine bracket 13B, respectively. Also, the respective rear side pipes 13 are positioned to overlap with a front side portion 30A of the fuel tank 30 to be described later in a side view. Further, an upper side part 13C of each rear side pipe 13 is formed narrower in the side view, while a lower side part 13D thereof is formed wider in the side view.

Also, a front end side of a swing arm 40 is coupled with the lower side part 13D of the rear side pipe 13 via a pivot shaft 41 for swing movement. A rear end side of the swing arm 40 is coupled with a rotational shaft of a rear wheel 60 for rotation.

Seat rails 24 extending rearward from the upper side parts 13C of the respective rear side pipes 13 are fixed to the respective main pipes 10 with bolts. A backstay 25 extending to curve obliquely upward rearward is fixed to the lower side part 13D of each rear side pipe 13 with bolts. A top end side of each backstay 25 is fixed to a mid portion of the respective seat rail 24 with bolts. A shock absorber 26 extends between the top end side of the backstay 25 and the rear end side of the swing arm 40.

A head pipe 14 is welded to the front ends of the respective middle pipes 11 forming the main pipes 10. A pivot shaft (not shown) attached to a handle bar 2 is fitted into the head pipe 14 for pivotal movement. The pivot shaft of the handle bar 2 is fixed to a mid portion of an under bracket 16 in the longitudinal direction thereof, the under bracket 16 extending in a right and left direction. Right and left top end sides of a front fork 17 (only one of them is shown) are inserted into right and left end sides of the under bracket 16 to be fixed. A front wheel 50 is coupled with a bottom end side of the front fork 17 for rotation. Additionally, the reference numeral 4 indicates outer covers, and the outer covers 4 cover the seat rails 24, the back stays 25, the fuel tank 30, etc. from an outside location.

The engine 20 is constructed as the so-called V-type four cylinder engine. This engine is formed to include a crankcase 21 vertically divided into an upper side case 21A and a lower side case 21 B, the right and left front side cylinders 22 (only one of them is shown) extending obliquely upward forward from a top front side of the upper side case 21A, and the right and left rear side cylinders 23 (only one of them is shown) positioned in the rear of the front side cylinders 22 and extending obliquely upward rearward from the top side of the upper side case 21 A. The engine 20 is suspended from the main pipes 10 to be attached thereto via the engine brackets 11 B, 12A, 13A, 13B, etc.

The fuel tank 30 is positioned rearward of the engine 20, and, more specifically, it is positioned rearward of the respective rear side pipes 13 of the main pipes 10 and below the seat 32 on which the rider sits. This seat 32 is disposed in such a manner that it covers the fuel tank 30 from above. Also, the fuel tank 30 is disposed rearward of the battery 80.

Further, regarding the fuel tank 30, the top end 30B thereof is positioned lower than a top end 80A of the battery 80, and a bottom end 30C is positioned lower than a bottom end 808 of the battery 80. Also, as shown in FIG. 1, the fuel tank 30 is placed in a space S surrounded by the rear side pipes 13 of the main frame 10, the swing arms 40 and the rear wheel 60 in a side elevational view. Further, the fuel tank 30 is positioned between the pair of rear side pipes 13 so as to partially overlap with the rear side flames 13 of the main frame 10 in the side elevational view.

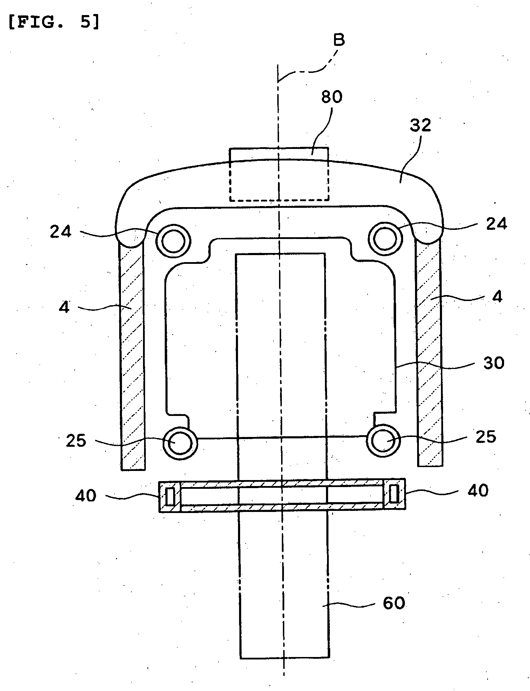

This fuel tank 30 is fixed to the seat rails 24, the backstays 25, etc. with bolts. Further, as shown in FIG. 5, the fuel tank 30 is generally configured as a rectangular shape when viewed from a rear side of the vehicle and is accommodated in a space surrounded by the right and left outer covers 4, 4, the seat 32 and the swing arms 40. Also, the respective centers of the battery 80, the fuel tank 30 and the rear wheel 60 extend along the center of the vehicle in the width direction, i.e., the center line B of FIG. 5. Because right and left protrusions of the battery 80 from the vehicle center are equal to each other, knee contacts made when the rider straddles the vehicle are even on both the right and left sides and the ride can be improved.

The fuel tank 30 accumulates gasoline to be supplied to the engine 20. A pump 31 positioned adjacent to the rear side pipes 13 of the main pipes 10 for supplying the fuel to the engine 20 is placed on the front portion side in the fuel tank 30. This fuel pump 31 is positioned rearward more than a rear end 80C of the battery 80.

The air cleaner 70 is provided for removing foreign substances such as, for example, dust contained in the air supplied to the engine 20. As shown in FIG. 2, the air cleaner 70 is arranged to protrude upward from top surfaces of the middle pipes 11 of the respective main pipes 10. The air cleaner 70 is disposed above the engine 20 and is fixed to the middle pipes 11 of the respective main pipes 10 with bolts. Also, the air cleaner 70 is covered by an exterior cover 33 from an outside location.

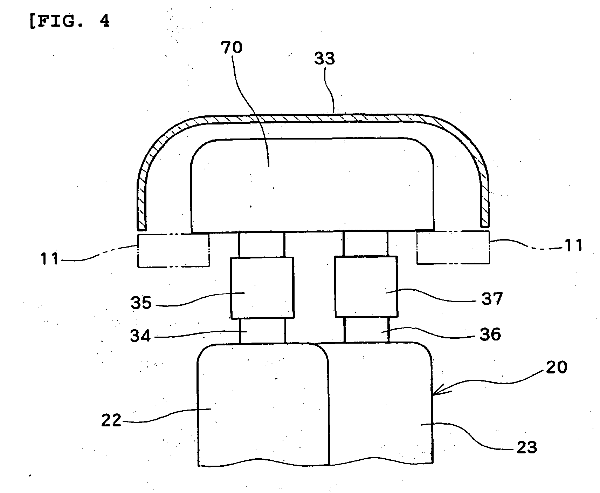

As shown in FIGs. 2 and 4, the air cleaner 70 and the respective front side cylinders 22 of the engine 20 are connected through front side intake pipes 34. A front side throttle body 35 for adjusting an amount of air intake introduced from the air cleaner 70 into each front side cylinder 22 is disposed at a mid portion of the respective front side intake pipe 34. Also, the air cleaner 70 and the respective rear side cylinders 23 of the engine 20 are connected through rear side intake pipes 36. A rear side throttle body 37 for adjusting an amount of air intake introduced from the air cleaner 70 into each rear side cylinder 23 is disposed at a mid portion of the respective rear side intake pipe 36.

The battery 80 is provided for storing electric power which is generated using a part of the output of the engine 20 and is charged thereto to supply the power to the engine 20, lights, indicators (which are not shown), etc. in accordance with requirements thereof. As shown in FIGs. 2 and 3, the battery 80 is generally formed as a rectangular parallelepiped and is positioned in front of the fuel tank 30 and in the rear of the air cleaner 70. Also, as shown in FIG. 2, the battery 80 is arranged together with the air cleaner 70 to protrude from the respective top surfaces of the middle pipes 11 of the main pipes 10, and is placed at a joining portion L of the exterior cover 33 and the seat 32. Further, as shown in FIG. 2, the battery 80 is laid along bending surfaces of the middle pipes 11. Also, as shown in FIG. 5, the top end side of the battery 80 protrudes upward beyond the seat 32.

Also, the battery 80 is positioned above the rear side cylinders 23 of the engine 20 and on and along axes A of the rear side cylinders 23. As shown in FIG. 3, this battery 80 has brackets 80A, 80B, 80C attached to right and left side surfaces and a rear surface thereof. The battery 80 is fixed to, for example, respective rear end sides of the middle pipes 11 forming the main pipes 10 and to a coupling plate 13F coupling the right and left middle pipes 11 via the brackets 80A, 80B, 80C with bolts under a condition that a length of the battery 80 in the fore to aft direction is larger than a length thereof in the width direction of the vehicle, i.e., the longitudinal direction of the battery 80 is directed in the fore to aft direction. Also, the battery 80, together with the air cleaner 70, is covered by the exterior cover 33 from an outer location.

Additionally, an upper radiator 90 and a lower radiator 91 are disposed between the engine 20 and the front wheel 50 For example, the upper radiator 90 is fixed to the respective front side pipes 12 of the main pipes 10, while the lower radiator 91 is fixed to the crankcase 21 of the engine 20.

Also, brackets 52 each formed with a generally triangularly shaped plate member are attached to a front fender 51 and the front fork 17. A cover 53 formed with a generally rectangularly shaped plate member which is arcuately bent in the width direction is fixed to each bracket 52 to cover the front fork 17 from a front location to a side location. The cover 53 has a function as a protecting cover for preventing foreign substances such as, for example, dust and insects from colliding against the front fork 17 in the running state.

In the motorcycle 1 according to the embodiment thus constructed, the battery 80 can be disposed in a broad space defined by the air cleaner 70 attached to the middle pipes 11 of the main frames 10 and the fuel tank 30 positioned rearward of the rear side pipes 13. The layout design of the battery 80 thus can be easily made.

In addition, the fuel tank 30 is disposed rearward of the battery 80, the top end 30B of the fuel tank 30 is positioned lower than the top end 80A of the battery 80, and the bottom end 30C of the fuel tank 30 is positioned lower than the bottom end 80B of this battery 80. The battery 80 and the fuel tank 30 thus are held in a non-interfering state with each other, and the tank capacity of the fuel tank 30 can be more easily assured. Also, because the air cleaner 70 and the battery 80 are disposed above the engine 20, the height of the vehicle can be kept lowered in comparison with the arrangement in which the fuel tank 30 is disposed above the engine 20. Further, because the bottom end 30C of the fuel tank 30 is positioned lower than the bottom end 80B of the battery 80, the height of the vehicle can be kept lowered. Furthermore, because the air cleaner 70, the battery 80 and the fuel tank 30 are offset from each other in the longitudinal direction of the vehicle, they are easily accessible from respective upper locations so that the maintenanceability can be improved and refueling can be easily made.

The structure in which the battery 80 is positioned in front of the fuel tank 30 and is sufficiently spaced apart from the fuel tank 30 is applied. Thus, even though the fuel tank 30 is formed to have a large size, the fuel tank 30 and the battery 80 are held in the non-interfering state with each other so that the tank capacity of the fuel tank 30 can be ensured.

Because the battery 80 is disposed so that the longitudinal direction thereof is directed in the fore to aft direction, the battery 80 does not project outward from the vehicle body in the right and left width direction. The width of the vehicle body between knees of the rider while straddling the vehicle body thus can be narrowed so that the ride of the vehicle can be enhanced.

Because the structure in which the battery 80 that is relatively heavy is positioned adjacent to the air cleaner 70 placed in the front portion side of the vehicle is applied, a load allotted to the front wheel can be large by the battery 80 and the ride of the motorcycle 1 can be enhanced.

Because the battery 80 is placed at the joining portion L of the exterior cover 33 and the seat 32, the battery 80 can be easily exchanged for new one in a maintenance service only by detaching the exterior cover 33 and the seat 32. The workability in the maintenance service can be improved, accordingly.

Because the battery 80 is positioned above the rear side cylinders 23 and on the axes A of the rear side cylinders 23, wirings (not shown) connecting the engine 20 and the battery 80 to each other can be easily attached or detached in the maintenance service. The workability in the maintenance service thus can be improved.

Meanwhile, in the embodiment, each rear side pipe 13 positioned on the rear portion side of the main pipe 10 is arcuately bent. Thereby, when the rear side pipes 13 of the main pipes 10 are coupled with the crankcase 21 of the engine 20, the load from the engine is not locally or intensively applied to the bent portions of the respective main pipes as described in connection with the conventional art. The load from the engine thus can be equally given to all parts of the main pipes 10. The rigidity of the main pipes 10 can be enhanced, accordingly.

The structure in which each rear side pipe 13 positioned on the rear portion side of the main pipe 10 extends downward, while arcuately curving to turn toward the rear side of the pivot shaft 41 from the rear end of the middle pipe 11 is applied. Thus, the load directed rearward from the engine 20 and transmitted to the main pipes 10 can be more surely received by the rear side pipes 13, in comparison with the structure described as the conventional art in which the rear side pipes extend straightly and generally perpendicularly downward from the respective rear end sides of the front side pipes to be connected to the crankcase of the engine. Thereby, the rigidity of the main pipes 10 can be enhanced so that the performance, reliability, etc. of the motorcycle 1 can be improved.

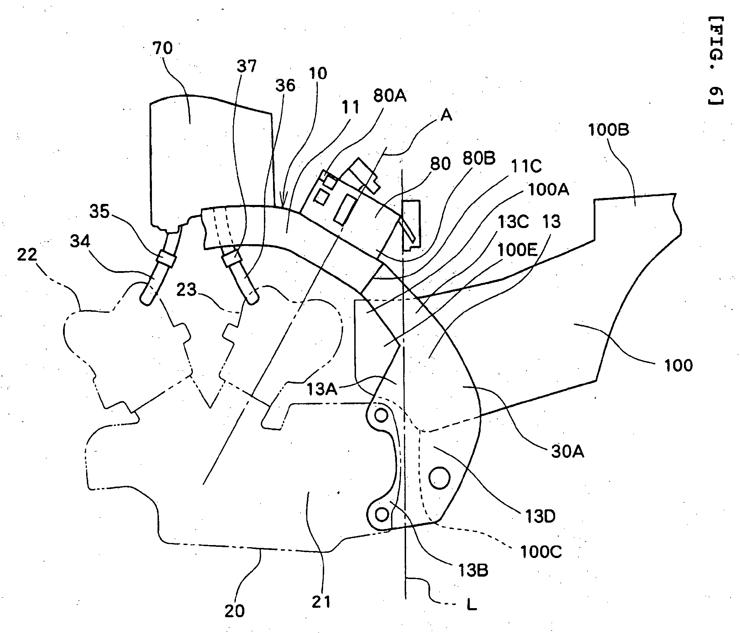

Next, FIG. 6 shows a second embodiment. Additionally, in this embodiment, the same constituents as those of the first embodiment will be assigned with the same reference numerals and symbols, and the descriptions thereof is not repeated.

Herein, the fuel tank 100 used in this embodiment has a front side portion 100A, a top end 100B and a bottom end 100C similarly to the fuel tank 30 described in the first embodiment, and is disposed at almost the same position as that of the fuel tank 30 described in the first embodiment.

However, the fuel tank 100 in this embodiment differs from the first embodiment in a point that the side of the front side portion 100A is configured as a protruding portion 100E that protrudes forward more than a line L of FIG. 6 extending through a rear end of the battery 80.

In this embodiment as thus constructed, because the structure in which the side of the front end portion 100A of the fuel tank 100 protrudes more than the rear end of the battery 80 is employed, the tank capacity of the fuel tank 100 can be increased to the extent of this protruding portion 100E that is protruded.

Additionally, in the embodiment, the motorcycle 1 is described as an example of the straddle-type vehicle. The present teaching is not limited to it. For instance, the present teaching can be applied to other straddle-type vehicles such as, for example, three-wheeled vehicles and buggy vehicles.

The description above discloses (amongst others) an embodiment of a straddle-type vehicle for resolving the conventional problems includes an air cleaner disposed above an engine, a battery disposed rearward of the air cleaner and above the engine, and a fuel tank disposed rearward of the battery, in which a top end of the fuel tank is positioned lower than a top end of the battery, and a bottom end of the fuel tank is positioned lower than a bottom end of the battery.

Because the fuel tank is disposed rearward of the battery, the battery and the fuel tank are held in a non-interfering state with each other, and the tank capacity of the fuel tank can be easily assured. Also, because the air cleaner and the battery are disposed above the engine, the height of the vehicle can be kept lowered in comparison with an arrangement in which the fuel tank is disposed above the engine. Further, because the bottom end of the fuel tank is positioned lower than the bottom end of the battery, the height of the vehicle can be kept lowered. In addition, the battery layout is easily made in comparison with an arrangement in which the battery is positioned in a narrow space between the fuel tank and the engine in a vertical direction of the vehicle.

According to another embodiment, the air cleaner can protrude upward from a top surface of the frame to be positioned, the fuel tank can protrude from a top end of the frame to the top surface thereof to be positioned, and the battery is placed between the fuel tank and the air cleaner. As thus constructed, the battery can be placed using the space defined between the air cleaner and the fuel tank, while ensuring the capacity of the air cleaner and the capacity of the fuel tank.

According to another preferred embodiment, a cover covering the air cleaner and the battery and a seat covering a top of the fuel tank can be further provided. As thus constructed, the cover can cover the air cleaner and the battery. The height of the vehicle thus can be kept lower in comparison with the structure in which the fuel tank covers the respective tops of the air cleaner and the battery.

According to another preferred embodiment, the battery can be placed at a joining portion of the cover and the seat. As thus constructed, the battery can be easily attached or detached from a location above the vehicle only by removing the cover and the seat.

According to another preferred embodiment, the battery can be laid along a bending surface of the frame. As thus constructed, the battery does not protrude upward and can form a joining configuration of the cover and the seat.

The engine is a V-type engine having a front side cylinder and a rear side cylinder, and the battery can be positioned above the rear side cylinder and on an axis of the rear side cylinder. As thus constructed, wires connecting the engine and the battery to each other can be easily attached or detached only by removing the cover and the seat.

In a further preferred embodiment, the fuel tank, at least in part, protrudes forward more than a rear end of the battery. Because of this construction, the tank capacity of the fuel tank can be increased to the extent that the fuel tank, at least in part, protrudes forward more than the rear end of the battery.

In a further preferred embodiment, a fuel pump disposed in the fuel tank is positioned rearward more than a rear end of the battery. Because of this construction, the fuel pump is held in a non-interfering state with the battery so that the layout of the fuel pump can be easily made.

In a further preferred embodiment, a frame extending in a longitudinal direction of the vehicle has, at a rear portion thereof, a rear side frame extending downward toward a rear portion of the engine, a swing arm is coupled with the rear side frame for swing movement, a rear wheel is coupled with the swing arm, and the fuel tank, at least in part, is placed in a space surrounded by the rear side frame, the swing arm and the rear wheel in a side elevational view. Because of this construction, the fuel tank can be easily placed using the space surrounded by the rear side frame, the swing arm and the rear wheel so that the tank capacity of the fuel tank can be surely assured.

In a further preferred embodiment, a pair of rear side frames extends in a vertical direction behind the engine, and the rear side frames and the fuel tank partially overlap with each other in a side elevational view. Because of this construction, the fuel tank can be easily placed using a space between the pair of rear side frames so that the tank capacity of the fuel tank can be increased.

According to the straddle-type vehicle of the above embodiments, the construction in which an air cleaner disposed above an engine, a battery is disposed rearward of the air cleaner and above the engine, and a fuel tank is disposed rearward of the battery, a top end of the fuel tank is positioned lower than a top end of the battery, and a bottom end off the fuel tank is positioned lower than a bottom end of the battery is applied. Because the fuel tank is disposed rearward of the battery, the battery and the fuel tank are held in a non-interfering state with each other, the tank capacity of the fuel tank can be easily assured. Also, because the air cleaner and the battery are disposed above the engine, the height of the vehicle can be kept lowered in comparison with an arrangement in which the fuel tank is disposed above the engine. Further, because the bottom end of the fuel tank is positioned lower than the bottom end of the battery, the height of the vehicle can be kept lowered. In addition, the battery layout is easily made in comparison with an arrangement in which the battery is positioned in a narrow space between the fuel tank and the engine in a vertical direction of the vehicle.

According to a preferred first aspect, the description discloses a straddle-type vehicle comprising: an air cleaner disposed above an engine; a battery disposed rearward of the air cleaner and above the engine; and a fuel tank disposed rearward of the battery, wherein a top end of the fuel tank is positioned lower than a top end of the battery, and a bottom end of the fuel tank is positioned lower than a bottom end of the battery.

Further, according to a preferred second aspect, the straddle-type vehicle further comprises a cover covering the air cleaner and the battery; and a seat covering a top of the fuel tank.

Further, according to a preferred third aspect, the battery is placed at a joining portion of the cover and the seat.

Further, according to a preferred fourth aspect, the battery is laid along a bending surface of a frame extending in a longitudinal direction of the vehicle.

Further, according to a fifth aspect, the engine is a V-type engine having a front side cylinder and a rear side cylinder, and the battery is positioned above the rear side cylinder and on an axis of the rear side cylinder.

Further, according to a preferred sixth aspect, the battery is attached to the frame under a condition that a length thereof in a width direction of the vehicle is larger than a length thereof in a fore to aft direction of the vehicle.

Further, according to a preferred seventh aspect, the fuel tank, at least in part, protrudes forward more than a rear end of the battery.

Further, according to a preferred eighth aspect, a fuel pump disposed in the fuel tank is positioned rearward more than a rear end of the battery.

Further, according to a preferred ninth aspect, a frame extending in a longitudinal direction of the vehicle has, at a rear portion thereof, a rear side frame extending downward toward a rear portion of the engine, a swing arm is coupled with the rear side frame for swing movement, a rear wheel is coupled with the swing arm, and the fuel tank, at least in part, is placed in a space surrounded by the rear side frame, the swing arm and the rear wheel in a side elevational view.

Further, according to a preferred tenth aspect, a pair of rear side frames extends in a vertical direction behind the engine, and the rear side frames and the fuel tank partially overlap with each other in a side elevational view.

The description further discloses, as a particularly preferred embodiment, in order to ensure a sufficient tank capacity of a fuel tank and also to make a layout design of a battery easier, an embodiment in which an engine 20 is suspended from main pipes 10 to be attached thereto, a fuel tank 30 is positioned rearward of the engine 20, an air cleaner 70 is fixed to middle pipes 11 of the respective main pipes 10 above the engine 20, and a battery 80 is fixed to the middle pipes 11 of the main pipes 10 at a position between the fuel tank 30 and the air cleaner 70.

## Claims

1. Straddle-type vehicle (1), in particular two-wheeled vehicle such as motorcycle, comprising:
an engine (20),
an air cleaner (70) disposed above the engine (20);
a battery (80) disposed rearward of the air cleaner (70) and above the engine (20); and
a fuel tank (30) disposed rearward of the battery (80),
**characterized in that** a top end (30B) of the fuel tank (30) is positioned lower than a top end (80A) of the battery (80), and wherein a bottom end (30C) of the fuel tank (30) is positioned lower than a bottom end (80B) of the battery (80),
wherein the engine (20) is a V-type engine having a front side cylinder (22) and a rear side cylinder (23), and the battery (80) is positioned above the rear side cylinder (23) and
on an axis (A) of the rear side cylinder (23).

2. Straddle-type vehicle according to claim 1, further comprising a cover (33) covering the air cleaner (70) and the battery (80), and a seat (32) covering a top of the fuel tank (30).

3. Straddle-type vehicle according to claim 2, wherein the battery (80) is placed at a joining portion (L) of the cover (33) and the seat (32).

4. Straddle-type vehicle according to one of the claims 1 to 3, wherein the battery (80) is laid along a bending surface of a frame (10) extending in a longitudinal direction of the vehicle.

5. Straddle-type vehicle according to one of the claims 1 to 4, wherein the battery (80) is attached to a frame (10) under a condition that a length thereof in a fore to aft direction of the vehicle is larger than a length thereof in a width direction of the vehicle.

6. Straddle-type vehicle according to one of the claims 1 to 5, wherein the fuel tank (30), at least in part, protrudes forward more than a rear end (80B) of the battery (80).

7. Straddle-type vehicle according to one of the claims 1 to 6, wherein a fuel pump (31) disposed in the fuel tank (30) is positioned rearward more than a rear end (80B) of the battery (80).

8. Straddle-type vehicle according to one of the claims 1 to 7, wherein a frame (10) extending in a longitudinal direction of the vehicle has, at a rear portion thereof, a rear side frame (13) extending downward toward a rear portion of the engine, a swing arm (40) is coupled with the rear side frame (13) for swing movement, a rear wheel (60) is coupled with the swing arm (40), and wherein the fuel tank (30), at least in part, is placed in a space (S) surrounded by the rear side frame (13), the swing arm (40) and the rear wheel (60) in a side elevational view.

9. Straddle-type vehicle according to one of the claims 1 to 8, wherein a pair of rear side frames (13) extends in a vertical direction behind the engine, and the rear side frames (13) and the fuel tank (30) partially overlap with each other in a side elevational view.

10. Straddle-type vehicle according to one of the claims 1 to 9, wherein the respective centers of the battery (80), the fuel tank (30), and the rear wheel (60) extend along a center line (B) of the vehicle in the width direction.

## Patentansprüche

1. Zweiradfahrzeug (1), insbesondere Zweiradfahrzeug wie z. B. ein Motorrad, aufweisend:
einen Motor (20),
einen Luftreiniger (70), der oberhalb des Motors (20) angeordnet ist,
eine Batterie (80), die hinter dem Luftreiniger (70) und oberhalb des Motors (20) angeordnet ist, und
einen Benzintank (30), der hinter der Batterie (80) angeordnet ist,
**dadurch gekennzeichnet, dass**
ein oberes Ende (30B) des Benzintanks (30) niedriger positioniert ist als ein oberes Ende (80A) der Batterie (80), und wobei ein unteres Ende (30C) des Benzintanks (30) niedriger positioniert ist als ein unteres Ende (80B) der Batterie (80),
wobei der Motor (20) ein V-Typ-Motor ist mit einem Vorderseitenzylinder (22) und einem Hinterseitenzylinder (23), und die Batterie oberhalb des Hinterseitenzylinders (23) und an einer Achse (A) des Hinterseitenzylinders (23) positioniert ist.

2. Zweiradfahrzeug gemäß Anspruch 1, weiter aufweisend eine Abdeckung (33), die den Luftreiniger (70) und die Batterie (80) abdeckt, und ein Sitz (32), der ein Oberteil des Benzintanks (30) abdeckt.

3. Zweiradfahrzeug gemäß Anspruch 2, wobei die Batterie (80) an einem Verbindungsabschnitt (L) der Abdeckung (33) und des Sitzes (32) platziert ist.

4. Zweiradfahrzeug gemäß einem der Ansprüche 1 bis 3, wobei die Batterie (80) entlang einer Biegefläche des Rahmens (10) gelegt ist, der sich in einer Längsrichtung des Fahrzeugs erstreckt.

5. Zweiradfahrzeug gemäß einem der Ansprüche 1 bis 4, wobei die Batterie (80) an einem Rahmen (10) unter einer Bedingung angebracht ist, dass eine Länge davon in einer Vorwärts-Rückwärtsrichtung des Fahrzeugs größer ist als eine Länge davon in einer Breiterichtung des Fahrzeugs.

6. Zweiradfahrzeug gemäß einem der Ansprüche 1 bis 5, wobei der Benzintank (30) zumindest teilweise vorwärts mehr vorsteht als ein hinteres Ende (80B) der Batterie (80).

7. Zweiradfahrzeug gemäß einem der Ansprüche 1 bis 6, wobei eine Benzinpumpe (31) innerhalb des Benzintanks (30) weiter hinten positioniert ist als ein hinteres Ende (80B) der Batterie (80).

8. Zweiradfahrzeug gemäß einem der Ansprüche 1 bis 7, wobei ein Rahmen (10), der sich entlang einer Längsrichtung des Fahrzeugs erstreckt, an einem hinteren Abschnitt davon, einen Hinterseitenrahmen (13) hat, der sich nach unten zu einem hinteren Abschnitt des Motors erstreckt, ein Schwingenarm (40) ist mit dem Hinterseitenrahmen (13) für eine schwingende Bewegung gekoppelt, ein Hinterrad (60) ist mit dem Schwingenarm (40) gekoppelt, und wobei der Benzintank (30) zumindest teilweise in einem Raum platziert ist, der von dem Hinterseitenrahmen (13), dem Schwingenarm (40) und dem Hinterrad (60) in einer Seitendraufsicht umgeben ist.

9. Zweiradfahrzeug gemäß einem der Ansprüche 1 bis 8, wobei sich ein Paar von Hinterseitenrahmen (13) in einer Vertikalrichtung hinter dem Motor erstreckt, und sich die Hinterseitenrahmen (13) und der Benzintank (30) teilweise miteinander in einer Seitendraufsicht überdecken.

10. Zweiradfahrzeug gemäß einem der Ansprüche 1 bis 9, wobei sich die entsprechenden Mittelpunkte der Batterie (80), des Benzintankts (30), und des Hinterrads (60) entlang einer Mittellinie (B) des Fahrzeugs in der Breitenrichtung erstrecken.

## Revendications

1. Véhicule de type à selle (1), en particulier véhicule à deux roues, tel qu'une motocyclette, comprenant :
un moteur thermique (20),
un filtre à air (70) placé au-dessus du moteur (20),
une batterie (80) placée à l'arrière du filtre à air (70) et au-dessus du moteur (20), et
un réservoir de carburant (30) placé à l'arrière de la batterie (80),
**caractérisé en ce que** l'extrémité supérieure (30B) du réservoir de carburant (30) est positionnée plus bas que l'extrémité supérieure (80A) de la batterie (80), et où l'extrémité inférieure (30C) du réservoir de carburant (30) est positionnée plus bas que l'extrémité inférieure (80B) de la batterie (80),
dans lequel le moteur (20) est un moteur de type en V possédant un cylindre du côté avant (22) et un cylindre du côté arrière (23), et la batterie (80) est positionnée au-dessus du cylindre de côté arrière (23) et sur l'axe (A) du cylindre de côté arrière (23).

2. Véhicule de type à selle selon la revendication 1, comprenant en outre un carter (33) recouvrant le filtre à air (70) et la batterie (80), ainsi qu'un siège (32) recouvrant le sommet du réservoir de carburant (30).

3. Véhicule de type à selle selon la revendication 2, dans lequel la batterie (80) est placée au niveau de la partie formant jonction (L) du carter (33) avec le siège (32).

4. Véhicule de type à selle selon l'une des revendications 1 à 3, dans lequel la batterie (80) est posée le long d'une surface se bombant d'un cadre (10) s'étendant dans la direction longitudinale du véhicule.

5. Véhicule de type à selle selon l'une des revendications 1 à 4, dans lequel la batterie (80) est fixée au cadre (10) dans un état tel que sa longueur dans la direction d'avant en arrière du véhicule est plus grande que sa longueur dans la direction de la largeur du véhicule.

6. Véhicule de type à selle selon l'une des revendications 1 à 5, dans lequel le réservoir de cadre (30) dépasse au moins en partie vers l'avant plus que l'extrémité arrière (80B) de la batterie (80).

7. Véhicule de type à selle selon l'une des revendications 1 à 6, dans lequel une pompe à carburant (31), disposée dans le réservoir de carburant (30), est positionnée à l'arrière plus que l'extrémité arrière (80B) de la batterie (80).

8. Véhicule de type à selle selon l'une des revendications 1 à 7, dans lequel le cadre (10) s'étendant dans la direction longitudinale du véhicule possède, au niveau de sa partie arrière, un cadre de partie arrière (13) s'étendant vers le bas, vers la partie arrière du moteur, un bras oscillant (40) étant couplé avec le cadre latéral arrière (13) en vue d'un mouvement oscillant, la roue arrière (60) étant couplée au bras oscillant (40), et où le réservoir de carburant (30) est placé au moins en partie dans un espace (S) entouré par le cadre latéral arrière (13), le bras oscillant (40) et la roue arrière (60) dans une vue latérale en élévation.

9. Véhicule de type à selle selon l'une des revendications 1 à 8, dans lequel une paire de cadres de partie arrière (13) s'étend dans la direction verticale derrière le moteur, et les cadres de partie arrière (13) ainsi que le réservoir de carburant (30) se chevauchent partiellement l'un l'autre dans une vue latérale en élévation.

10. Véhicule de type à selle selon l'une des revendications 1 à 9, dans lequel les centres respectifs de la batterie (80), du réservoir de carburant (30) et de la roue arrière (60) s'étendent le long de l'axe central (B) du véhicule dans la direction de la largeur.
